# EUROPÄISCHE PATENTSCHRIFT

(11) **EP 2 705 117 B1**
(45) Veröffentlichungstag und Bekanntmachung des Hinweises auf die Patenterteilung: **21.10.2015**
(21) Anmeldenummer: 12723076.1
(22) Anmeldetag: 04.05.2012
(51) Int. Cl.: C08J 11/10, C10G 1/02, C10G 1/10

(54) **VERFAHREN ZUR ENERGIEEFFIZIENTEN AUFBEREITUNG SEKUNDÄRER LAGERSTÄTTEN**
METHOD FOR ENERGY-EFFICIENT PROCESSING OF SECONDARY DEPOSITS
PROCÉDÉ POUR PRÉPARER DE MANIÈRE ÉNERGÉTIQUEMENT EFFICACE DES GISEMENTS SECONDAIRES

(30) Priorität: 05.05.2011 AT 6322011
(43) Veröffentlichungstag der Anmeldung: 12.03.2014
(73) Patentinhaber: OMV REFINING & MARKETING GMBH, 1020 Wien (AT)
(72) Erfinder: HOFER, Wolfgang, 1210 Wien (AT)
(74) Vertreter: Sonn & Partner Patentanwälte
(86) Internationale Anmeldenummer: PCT/AT2012/000127
(87) Internationale Veröffentlichungsnummer: WO 2012/149590

(56) Entgegenhaltungen:
- EP-A2- 0 659 867
- EP-A2- 0 814 143
- WO-A1-95/03375
- JP-A- H06 128 569
- JP-A- H09 291 288
- JP-A- 2001 240 873
- US-A- 5 288 934
- US-A1- 2003 199 718
- US-A1- 2007 098 625
- US-A1- 2009 062 581

## Beschreibung

Die Erfindung betrifft ein Verfahren zur Depolymerisation von Kunststoffmaterial gemäß Anspruch 1.

Es ist grundsätzlich bereits bekannt Alt- bzw. Abfallkunststoffe zu verölen, um die Alt- bzw. Abfallkunststoffe wiederzuverwerten.

Für die Kunststoffaufbereitung sind einerseits Hochtemperaturpyrolyseverfahren bekannt, bei welchen das Kunststoffmaterial in einem Temperaturbereich von ca. 600-1.000°C behandelt wird; andererseits sind Niedertemperaturdepolymerisationsverfahren bekannt, bei welchen Cracking-Reaktionen üblicherweise in einem Temperaturbereich von ca. 300-450°C durchgeführt werden. Insbesondere bei der Niedertemperaturdepolymerisation ist die Energiezufuhr zu den Molekülen des Kunststoffmaterials problematisch, da die Kunststoffschmelze eine hohe Viskosität aufweist und Kunststoffe grundsätzlich schlechte Wärmeleiter sind. Demzufolge konnten bisher nur relativ kleine Depolymerisationsreaktoren mit einem Umsatzvolumen von bis zu ca. 6.000 Tonnen pro Jahr realisiert werden; bei größeren Anlagen hingegen treten beträchtliche Probleme beim Wärmeeintrag auf. Anlagen mit einem Umsatzvolumen in der Größenordnung von 6.000 Tonnen pro Jahr sind jedoch kaum wirtschaftlich zu betreiben.

Andererseits sind z.B. aus der Publikation Shabtai J. et al., Energy & Fuels 11 (1997): 76-87 oder der US 2002/169223 A1, katalytische Depolymerisationsverfahren bekannt, bei welchen die Depolymerisation mittels einem katalytischen Cracking erfolgt.

Aus dem Stand der Technik ist eine Vorrichtung zur Depolymerisation von Alt- und Abfallkunststoffen, beispielsweise aus der WO 95/32262 bekannt, wobei hier zum schonenden Aufheizen des Reaktorinhalts ein Kreislaufsystem an den Reaktor angeschlossen ist und der Reaktorinhalt vor dem Eintritt in eine Abzugsleitung eine in den Reaktor integrierte Steigstrecke zur Abtrennung gröberer Festkörper-Partikel mit entsprechend hoher Sinkgeschwindigkeit durchläuft.

Aus der US 7,771,699 B2 bzw. der US 2007/098625 A1 ist weiters eine Vorrichtung zur Depolymerisation von organischen und anorganischen Abfallmaterialien bekannt, die gehäxelt werden, mit einem Lösungsmittel versetzt werden, und mit Hilfe von Wasser oder dergl. wird eine Suspension gebildet, welche sodann einer Depolymerisationsstufe zugeführt wird. Anschließend werden Feststoffe aus dieser Suspension entfernt. Hierbei ist es möglich, dass die beim Recycling von Reifen gewonnenen Kohlenwasserstoffe dem Reifen-Rohmaterial als Lösungsmittel zugesetzt werden.

Ein sehr ähnliches Verfahren, bei welchem eine wässrige Suspension dem Depolymerisationsreaktor zugeführt wird, ist weiters aus der WO 2009/108761 A1 bzw. der US 2009/062581 A1 bekannt. Bei diesem Verfahren kann zudem Röhol als Lösungsmittel zu zerstückeltem Rohmaterial zugesetzt werden. Zudem ist offenbart, dass ein derart aufbereitetes Rohmaterial in einem auf über 48,9°C (120°F) erwärmten Aufbewahrungsbehälter gesammelt werden kann.

Aus der EP 0 659 867 A2 ist weiters eine Vorrichtung bzw. ein Verfahren zur thermische Depolymerisation von Kunststoffen bekannt. Hierbei werden Kunststoffabfälle, zerkleinert oder als Granulat in ein Speicherbehälter gegeben. Vom Speicherbehälter gelangen die Kunststoffe über eine Leitung in eine Mischstrecke, wo sie mit vom Reaktor abgepumpter Sumpfphase vermischt werden. Anschließend wird das Kunststoffmaterial in einen Vorbehandlungsbehälter geleitet, der mit einem Rührer ausgestattet ist. Im Vorbehandlungsbehälter findet dann eine Aufschmelzung der Polymere und eine völlige Vermischung der im Vorbehandlungsbehälter aufgestauten Flüssigkeit, d.h. des Reaktionsmediums für den Reaktor, statt.

Weiters ist aus der US 2008/035079 A ein Verfahren und eine Vorrichtung zur Depolymerisation von Kunststoffmaterial bekannt, bei welcher der Reaktor eine Trennvorrichtung aufweist, um flüssiges Kunststoffmaterial von dampfförmigem Kunststoffmaterial zu trennen.

Die WO 95/03375 A1 zeigt ein Verfahren zum Recyclen von Kunststoffabfällen in einem Steamcracker, wobei das einen Spaltofen verlassende Flüssigkeits-Dampfgemisch einer Kolonne zugeführt und ein Sumpfprodukt aus der Kolonne und in den Spaltofen zurückgeführt wird.

Die EP 0 814 143 A2 zeigt ein Verfahren zur Verarbeitung von Kunststoffabfällen zu Öl, wobei der Kunststoffschmelze vor dem Eintritt in den Reaktor vorgeheiztes Wasser zugesetzt wird.

In der US 5,288,934 ist ein Verfahren gezeigt, bei dem der Kunststoffschmelze eine schwere Fraktion zur Senkung der Viskosität der Mischung zugesetzt wird.

Die JP H06 128569 A schlägt eine Rückführung von Schlacke aus dem Reaktor sowie eine Homogenisierung der Viskosität im Schmelzofen durch Rühren vor.

Die JP 2001 240873 A offenbart eine weitere Möglichkeit zur Vermeidung zu hoher Viskositäten, wobei die Kunststoffschmelze in einem unteren Bereich des Reaktors eingebracht wird, um sich mit dem dortigen schweren Flüssiganteil zu vermischen.

Die JP H09 291288 A schlägt vor, schwere Ölkomponenten, welche als Flüssigkeit niedriger Viskosität vorliegen, der Schmelze zur Senkung der Viskosität zuzusetzen.

Nachteilig ist bei allen bekannten Depolymerisationsverfahren bzw. -vorrichtungen, dass - wie eingangs bereits erwähnt - die Wärmeübertragung zu den Molekülen des Kunststoffmaterials insbesondere bei größeren Mengen schwierig ist.

Ziel der vorliegenden Erfindung ist es demzufolge, ein Verfahren zur thermischen Depolymerisation der eingangs angeführten Art zu schaffen, mit welchem bzw. welcher der Wärmeeintrag in das zu depolymerisierende Kunststoffmaterial verbessert wird. Hierdurch soll es insbesondere auch möglich sein, Depolymerisationsreaktoren mit einem größeren Fassungsvermögen zuverlässig betreiben zu können und somit Kunststoffmaterial zu wirtschaftlich akzeptablen Bedingungen zu depolymerisieren.

Erfindungsgemäß wird dies bei dem thermischen Depolymerisationsverfahren der eingangs angeführten Art dadurch erzielt, dass als Lösungsmittel ein Schweröl mit einem Siedeende > 300°C, vorzugsweise > 350°C, und mit einem Anteil an aromatischen Kohlenwasserstoffen von zumindest 25% verwendet wird, so dass die Viskosität der dem Depolymerisationsreaktor zugeführten Kunststoffschmelze-Lösung gegenüber der Viskosität der Kunststoffschmelze verringert wird. Durch das Zusetzen eines Lösungsmittels in das entgaste und geschmolzene Kunststoffmaterial, d.h. das erwärmte, nicht feste Kunststoffmaterial, kann die Viskosität der Kunststoffschmelze verringert werden und somit der Wärmeeintrag in das Kunststoffmaterial im Depolymerisationsreaktor verbessert werden. Somit erfolgt eine thermische Depolymerisation, bei welcher kein Zusatz eines Katalysators, von Wasserstoff oder dergl. erfolgt. Die Depolymerisation des Kunststoffmaterials erfolgt somit mittels thermischem Cracking und nicht mittels katalytischem Cracking. Die als Lösungsmittel vorgesehene Rohöl-Fraktion ist vorteilhafterweise ein Rückstandsöl aus der Destillation und/oder aus Crack-Anlagen der Erdölverarbeitung. Dadurch dass das Lösungsmittel ein höheres Siedeende als die Betriebstemperatur im Depolymerisationsreaktor aufweist, kann vermieden werden, dass das Lösungsmittel unmittelbar nach Einbringen der Kunststoffschmelze-Lösung in den Depolymerisationsreaktor verdampft. Die Kunststoffschmelze weist bei Einbringung des Lösungsmittels vorzugsweise eine Temperatur von zumindest 120 °C, insbesondere zwischen 150 °C und 300 °C, auf; zwecks Erzielung einer möglichst homogenen Lösung ist vorteilhafterweise auch das Lösungsmittel auf zumindest 150°C, insbesondere auf im Wesentlichen 200°C bis 300°C vorgewärmt. Durch das Einbringen einer Lösung in den Depolymerisationsreaktor ergibt sich ein geringerer Abfall des Temperaturgradienten im Querschnitt des Depolymerisationsreaktors und somit eine deutlich geringere Gefahr des Überhitzens des Kunststoffmaterials in der Nähe der Reaktorwand, an deren Außenseite üblicherweise eine Heizvorrichtung vorgesehen ist. Darüber hinaus wird auch die Gefahr des Verkokens des Kunststoffmaterials verringert. Weiters kann durch die Viskositätserniedrigung gegenüber der reinen Kunststoffschmelze die Pumpfähigkeit der Kunststoffschmelze-Lösung deutlich verbessert werden, wodurch der Energieaufwand für den Betrieb des Depolymerisationsreaktors verringert werden kann. Darüber hinaus ist es bei derzeitigen Depolymerisationsreaktoren häufig erforderlich, eine zentrale Rührvorrichtung vorzusehen, welche nachteiligerweise über Störstoffe in der Kunststoffschmelze abgenutzt wird. Durch die Viskositätserniedrigung ist es vorteilhafterweise möglich, auf eine Rührvorrichtung zu verzichten, wodurch der Betriebs- und Wartungsaufwand reduziert wird.

Um eine Durchmischung des in den Depolymerisationsreaktor eingebrachten Kunststoffmaterials zu erzielen, ist es von Vorteil, wenn kontinuierlich Kunststoffschmelze aus dem Depolymerisationsreaktor abgepumpt und in den Depolymerisationsreaktor rückgeführt wird. Hierbei wird vorzugsweise in einem unteren Teil des Reaktors oberhalb eines Reaktorsumpfes ein Teil des Reaktorinhalts abgezogen und zur weiteren Depolymerisation wiederum in den Reaktor rückgeführt. Hinsichtlich einer zuverlässigen Durchmischung des Inhalts im Depolymerisationsreaktor und zur Erzeugung von Turbulenzen im Reaktor ist es von Vorteil, wenn kontinuierlich Kunststoffschmelze aus dem Depolymerisationsreaktor abgepumpt und in den Depolymerisationsreaktor rückgeführt wird.

Um das Kunststoffmaterial, welches über den Versorgungskreislauf rückgeführt wird, mit Lösungsmittel zu versetzen und somit günstige Bedingungen für einen Wärmeeintrag im Depolymerisationsreaktor zu schaffen, ist es von Vorteil, wenn das Lösungsmittel in den Versorgungskreislauf eingebracht, vorzugsweise eingespritzt, wird. Sofern das zuvor entgaste und geschmolzene Kunststoffmaterial ebenfalls über den Versorgungskreislauf in den Depolymerisationsreaktor eingebracht wird, ist sichergestellt, dass neu zugeführtes Kunststoffmaterial und über den Versorgungskreislauf aus dem Depolymerisationsreaktor abgepumptes Kunststoffmaterial zunächst zusammengeführt werden und sodann dem vereinten Schmelzmaterial das Lösungsmittel zugesetzt wird, so dass der verbesserte Wärmeeintrag im Reaktor sichergestellt ist.

Um sicherzustellen dass sich das Kunststoffmaterial in dem Lösungsmittel löst, ist es günstig, wenn das Lösungsmittel vorzugsweise auf ca. zumindest 150°C, insbesondere auf im Wesentlichen 200°C bis 300°C erwärmt wird, bevor es der Kunststoffschmelze zugesetzt wird.

Hierbei ist es insbesondere vorteilhaft, wenn als Lösungsmittel ein Schweröl zugesetzt wird. Schweröl (sog. Heavy Fuel Oil (HFO) und dessen Komponenten) ist ein Rückstandsöl aus der Destillation und/oder aus Crack-Anlagen der Erdölverarbeitung, wobei dieses derzeit primär als Kraftstoff für Schiffsdieselmotoren und Brennstoff Absatz findet. Der Absatz des Schweröls ist jedoch rückläufig, so dass Überkapazitäten bestehen. Demzufolge kann Schweröl als günstiges und zudem effizientes Lösungsmittel bzw. Viskositätsverringerungsmittel zur Depolymerisation von Kunststoffmaterial eingesetzt werden. Zudem enthalten manche Schweröle feinkörnige Reste von Katalysatoren, welche einen positiven Einfluss auf das Cracking-Verhalten bei der Depolymerisation haben können.

Als besonders vorteilhaft hat sich herausgestellt, wenn als Lösungsmittel Schweröle bzw. ein Gemisch verschiedener Schweröle eingesetzt werden, welche in der EINECS (European Inventory of Existing Commercial Chemical Substances)-Klassifizierung die Nr. 265-xxx-x oder Nr. 270-xxx-x aufweisen, wobei x einen beliebigen Platzhalter darstellt. Besonders bevorzugt ist hierbei ein Schweröl ausgewählt aus einer Gruppe umfassend folgende EINECs-Nr.: 265-064-6, 265-058-3, 265-189-6, 265-045-2, 265-193-8, 265-081-9, 270-675-6, 265-060-4.

Zur Verbesserung des Wärmeeintrags mittels einer Viskositätserniedrigung ist es günstig, wenn die Viskosität der Kunststoffschmelze-Lösung bei einer Temperatur von im Wesentlichen 180°C bis 240°C gegenüber der Kunststoffschmelze ohne Lösungsmittel um zumindest 30%, vorzugsweise um zumindest 50%, insbesondere um zumindest 80%, reduziert wird.

Um bei der Depolymerisation zweckmäßig weiterverwendbare Produkte zu erzielen, ist es von Vorteil, wenn das Kunststoffmaterial, welches beim erfindungsgemäßen Verfahren eingesetzt ist, vorsortiert wird, so dass nur spezielle Kunststoffmaterialien dem Depolymerisationsreaktor zugeführt werden. Hierbei ist es günstig, wenn als Kunststoffmaterial Polyolefine, insbesondere Polyethylen und Polypropylen, bzw. Polystyrol verwendet wird.

Eine zweckmäßige Temperatur zur Depolymerisation der Alt- bzw. Abfallkunstoffmaterialien ist gegeben, wenn das Kunststoffmaterial in dem Depolymerisationsreaktor bei ca. 300°C bis 500°C, vorzugsweise 350°C bis 450°C, depolymerisiert wird.

Hinsichtlich einer zweckmäßigen Weiterverarbeitung des im Reaktor depolymerisierten Kunststoffmaterials ist es günstig, wenn das depolymerisierte Kunststoffmaterial in einem oberen Abschnitt des Depolymerisationsreaktors dampfförmig abgezogen wird. Die vorzugsweise am Kopf des Depolymerisationsreaktors abgezogene Produktmischung kann sodann einer nachgeschalteten Trennkolonne zugeführt werden, wobei es hierbei besonders von Vorteil ist, wenn das dampfförmige, depolymerisierte Kunststoffmaterial in mehrere Produkte aufgetrennt wird, vorzugsweise einen Gasstrom, Flüssiggas und Naphtha, sowie ein gasölähnliches Produkt.

Um den Wärmeeintrag in das Kunststoffmaterial möglichst effizient zu gestalten, ist es von Vorteil, wenn die Kunststoffschmelze-Lösung vor Einbringung in den Depolymerisationsreaktor erwärmt wird. Somit kann bereits ein wesentlicher Teil der Wärme, die für die endothermen Cracking-Reaktionen im Rahmen der Depolymerisation erforderlich ist, vor der Einbringung der Kunststoffschmelze-Lösung in den Depolymerisationsreaktor der Kunststoffschmelze-Lösung zugeführt werden.

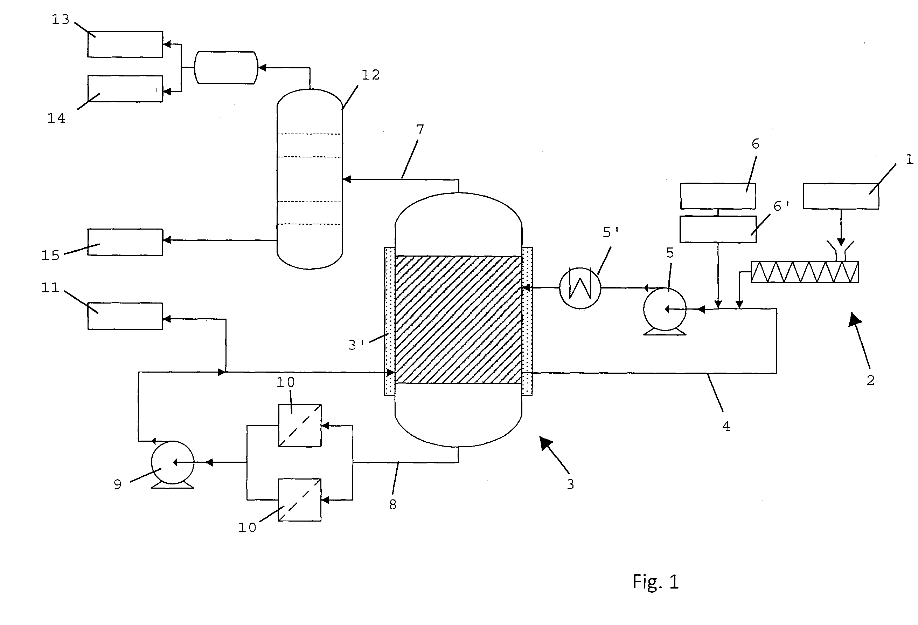

Die Erfindung wird nachstehend anhand eines in der Zeichnung dargestellten bevorzugten Ausführungsbeispiels, auf das sie jedoch keinesfalls beschränkt sein soll, noch näher erläutert.

Die einzige Zeichnungsfigur zeigt hierbei schematisch den Aufbau des erfindungsgemäßen Verfahrens.

In der einzigen Zeichnungsfigur ist ersichtlich, dass vorsortiertes Kunststoffmaterial, welches insbesondere aus Polyolefinen, vorzugsweise Polyethylen und/oder Polypropylen, und gegebenenfalls Polystyrol besteht, einem als Eintragsvorrichtung bzw. Entgasungs- und Schmelzvorrichtung 2 vorgesehenen Extruder zugeführt wird. In dem Extruder 2 wird das Kunststoffmaterial kompaktiert, entgast und geschmolzen. Die aus dem Extruder 2 austretende Kunststoffschmelze wird nicht direkt einem Depolymerisationsreaktor 3 zugeführt, sondern in eine Versorgungskreislaufleitung 4 eingebracht. Über die Versorgungskreislaufleitung 4 wird mit Hilfe einer Pumpe 5 zudem oberhalb eines im unteren Teil des Reaktors 3 anfallenden Reaktorsumpfes ein Teil der im Reaktor 3 befindlichen Kunststoffschmelze abgezogen. Durch die Einbringung von Lösungsmittel 6 in die Versorgungskreislaufleitung 4 wird das Lösungsmittel 6 somit der aus dem Reaktor 3 abgezogenen Kunststoffschmelze sowie der über den Extruder 2 zugeführten Kunststoffschmelze zugemischt. Vor Zumischung des Lösungsmittels 6 zu der Kunststoffschmelze wird das Lösungsmittel 6 einer Lösungsmitteleinbringungsvorrichtung 6' zugeführt, in welcher das Lösungsmittel 6 auf ca. 200°C bis 300°C, insbesondere ca. 250°C vorgewärmt wird.

Durch die Zufuhr des Lösungsmittels 6 in die Versorgungsleitung 4 über die Lösungsmitteleinbringungsvorrichtung 6', welche insbesondere nicht näher dargestellte Düsen zum über zumindest eine Dosierpumpe gesteuerten Einspritzen von Lösungsmittel 6 in die Kunststoffschmelze aufweist, kann somit die Viskosität der Kunststoffschmelze, welche in den Depolymerisationsreaktor 3 eingebracht wird, verringert werden. Bevorzugt wird hierbei zur Erzielung einer homogenen Lösung vorgewärmtes Schweröl (HFO) beigemischt. Bevorzugt wird hierbei ein Schweröl mit einer EINECS (European Inventory of Existing Commercial Chemical Substances)-Nummer bzw. CAS(Chemical Abstracts Service)-Nummer ausgewählt aus der nachfolgenden Tabelle 1 bzw. eine Mischung verschiedener dieser Schweröle zugemischt.

**Tabelle 1**

| | | |
|---|---|---|
| EINECS-Nummer | CAS-Nummer | |
| 269-783-6 | 68333-27-7 | |
| 295-990-6 | 92201-59-7 | |
| 265-064-6 | 64741-62-4 | |
| 269-782-0 | 68333-26-6 | |
| 265-063-0 | 64741-61-3 | |
| 269-784-1 | 68333-28-8 | |
| 274-684-6 | 70592-77-7 | |
| 270-984-6 | 68512-62-9 | |
| 274-683-0 | 70592-76-6 | |
| 265-058-3 | 64741-57-7 | |
| 265-189-6 | 64742-86-5 | |
| 265-162-9 | 64742-59-2 | |
| 273-263-4 | 68955-27-1 | |
| 274-685-1 | 70592-78-8 | |
| 285-555-9 | 85117-03-9 | |
| 292-658-2 | 90669-76-4 | |
| 270-796-4 | 68478-17-1 | |
| 270-983-0 | 68512-61-8 | |
| 271-763-7 | 68607-30-7 | |
| 272-184-2 | 68783-08-4 | |
| 269-777-3 | 68333-22-2 | |
| 265-045-2 | 64741-45-3 | |
| 265-181-2 | 64742-78-5 | |
| 265-193-8 | 64742-90-1 | |
| 308-733-0 | 98219-64-8 | |
| 271-013-9 | 68513-69-9 | |
| 292-657-7 | 90669-75-3 | |
| 273-272-3 | 68955-36-2 | |
| 270-792-2 | 68478-13-7 | |
| 265-069-3 | 64741-67-9 | |
| 265-081-9 | 64741-80-6 | |
| 265-082-4 | 64741-81-7 | |
| 265-076-1 | 64741-75-9 | |
| 309-863-0 | 101316-57-8 | |
| 298-754-0 | 93821-66-0 | |
| 295-396-7 | 92045-14-2 | |
| 272-187-9 | 68783-13-1 | |
| 271-384-7 | 68553-00-4 | |
| 270-675-6 | 68476-33-5 | |
| 270-674-0 | 68476-32-4 | |
| 265-057-8 | 64741-56-6 | |
| 265-188-0 | 64742-85-4 | |
| 295-518-9 | 92062-05-0 | |
| 302-656-6 | 94114-22-4 | |
| 309-712-9 | 100684-39-7 | |
| 309-713-4 | 100684-40-0 | |
| 265-043-1 | 64741-43-1 | |
| 272-341-5 | 68814-87-9 | |
| 272-817-2 | 68915-96-8 | |
| 296-468-0 | 92704-36-4 | |
| 309-695-8 | 100684-24-0 | |
| 265-060-4 | 64741-59-9 | |
| 265-062-5 | 64741-60-2 | |
| 269-781-5 | 68333-25-5 | |
| 271-260-2 | 68527-18-4 | |
| 285-505-6 | 85116-53-6 | |
| 295-411-7 | 92045-29-9 | |
| 308-278-8 | 97926-59-5 | |
| 309-865-1 | 101316-59-0 | |
| 309-939-3 | 101631-14-5 | |
| 307-662-2 | 97675-88-2 | |
| 265-049-4 | 64741-49-7 | |
| 265-059-9 | 64741-58-8 | |
| 265-190-1 | 64742-87-6 | |
| 295-407-5 | 92045-24-4 | |
| 295-408-0 | 92045-26-6 | |
| 295-409-6 | 92045-27-7 | |
| 307-750-0 | 97722-01-5 | |
| 309-693-7 | 100684-22-8 | |
| 309-694-2 | 100684-23-9 | |
| 265-092-9 | 64741-90-8 | |
| 265-112-6 | 64742-12-7 | |
| 265-129-9 | 64742-29-6 | |
| 265-148-2 | 64742-46-7 | |
| 265-182-8 | 64742-79-6 | |
| 265-183-3 | 64742-80-9 | |
| 270-719-4 | 68477-29-2 | |
| 270-721-5 | 68477-30-5 | |
| 292-454-3 | - | |
| 292-615-8 | 90640-93-0 | |
| 309-667-5 | 100683-97-4 | |
| 309-668-0 | 100683-98-5 | |
| 309-669-6 | 100683-99-6 | |
| 270-671-4 | 68476-30-2 | |
| 270-676-1 | 68476-36-6 | |
| 270-673-5 | 68476-31-3 | |

Tests haben gezeigt, dass durch Zumischung eines derartigen Lösungsmittels die Viskosität der in den Depolymerisationsreaktor 3 eingebrachten Lösung gegenüber der reinen Kunststoffschmelze signifikant verringert wird.

### Beispiel 1:

Aus reinem Polypropylen-Granulat und Lösungsmittel ("Geklärtes Sumpföl" (GSO), EINECs-Nr. 265-064-6) wurden Proben mit Zumischungsraten von 0 Gewichts-%, 50 Gewichts-%, 70 Gewichts-% und 100 Gewichts-% hergestellt. Unter Stickstoffatmosphäre wurden die Mischungen erhitzt und kurzzeitig (wenige Minuten) auf eine bevorzugte Prozesstemperatur des Depolymerisationsverfahrens von ca. 360-390°C gehalten, um einerseits die Prozessbedingungen mit zu berücksichtigen, andererseits um eine möglichst vollständige Homogenisierung der Proben zu erreichen. Danach erfolgte die Messung der dynamischen Viskosität bei den jeweiligen Messtemperaturen mithilfe eines Zylinder-Rheometers (Typ: Bohlin Visco 88 Viscometer) mit verschiedenen Rotationsgeschwindigkeiten im mittleren Justierbereich des Zylinders.

Folgende Werte konnten für die Mischungen konstant und nahezu unabhängig von der Schergeschwindigkeit (bei mittleren Geschwindigkeiten) ermittelt werden (die Viskosität des reinen Lösungsmittels war nicht bestimmbar, da die Viskosität außerhalb des Messbereichs lag):

**Tabelle 2: Viskositäten der Mischungen [Pa*s]**

| | Zumischungsraten Lösungsmittel [%] | | | |
|---|---|---|---|---|
| Messtemperatur [°C] | 0 (=reine Kunstoffschmelze) | 50 | 70 | 100 |
| 180 | 1,9 | 0,17 | 0,03 | n.b. |
| 200 | 0,6 | 0,12 | 0,02 | n.b. |
| 220 | 0,46 | 0,09 | 0,02 | n.b. |
| 240 | 0,37 | 0,06 | 0,01 | n.b. |

Durch die Zumischung eines Lösungsmittels und der damit erzielten Viskositätsverringerung ergeben sich vorteilhafterweise zudem höhere Turbulenzen im Depolymerisationsreaktor 3, wodurch insbesondere der Wärmeeintrag zu den Molekülen des Kunststoffmaterials verbessert wird. Darüber hinaus kann somit der Abfall des Temperaturgradienten entlang des Reaktorradius verringert werden, wodurch wiederum eine geringere Gefahr des Überhitzens im äußeren Randbereich des Reaktors 3 in der Nähe einer mantelförmigen Heizvorrichtung 3' des Reaktors besteht und die Gefahr einer Verkokung des Kunststoffmaterials verringert werden kann.

Um zudem den Wärmeeintrag zwecks Depolymerisation effizienter zu gestalten, ist in der Versorgungskreislaufleitung 4 zudem ein Wärmetauscher 5' vorgesehen, über welchen die Kunststoffschmelze-Lösung schon vor Einbringung in den Depolymerisationsreaktor 3 erwärmt wird.

In dem Depolymerisationsreaktor 3 wird das Kunststoffmaterial sodann in einem Temperaturbereich von ca. 350°C bis 450°C und im Wesentlichen atmosphärischem Druck depolymerisiert. Hierbei entsteht ein dampfförmiges Produkt, welches über eine Entnahmeleitung 7 über Kopf aus dem Reaktor 3 abgezogen wird. Die erforderliche Wärmezufuhr zur Erzielung der endothermen Cracking-Reaktionen zwecks Depolymerisation erfolgt einerseits über die Heizvorrichtung 3' des Depolymerisationsreaktors 3 und andererseits über den Wärmetauscher 5', bevor das Kunststoffschmelze/Schweröl-Gemisch bzw. die Lösung des Versorgungskreislaufs 4 in den Depolymerisationreaktor 3 eingebracht wird.

Zudem wird der im Reaktor 3 verbleibende Rückstand im Sumpf des Reaktors in eine Filtrationskreislaufleitung 8 mit Hilfe einer Pumpe 9 abgepumpt. Die nicht umgesetzten Kunststoffreste und der bei der Depolymerisation entstehende Koks werden hierbei mit Hilfe von Filtern 10 aus dem Sumpfprodukt entfernt, das teilweise wiederum in den Depolymerisationsreaktor 3 rückgeführt wird. Auch dieses im Filtrationskreislaufleitung 8 beförderte Kunststoffmaterial kann vor Rückführung in den Reaktor 3 in einem nicht näher gezeigten Wärmetauscher erwärmt werden. Ein besonders schwer siedender Teil wird hierbei aus der Filtrationskreislaufleitung 8 als Nebenprodukt 11 abgezweigt.

Die am Kopf des Reaktors 3 über die Entnahmeleitung 7 abgezogene gasförmige Produktmischung wird einer nachgeschaltenen Trennkolonne 12 zugeführt. Die Produktmischung wird hierbei in der Trennkolonne 12 in drei Produktströme aufdestilliert. Die Trennung erfolgt hierbei im Wesentlichen in einen Gasstrom 13, Flüssiggas (LPG - Liquified Petroleum Gas), d.h. Propan, Butan und deren Gemische, und ein naphtahältiges Produkt 14 sowie gasölähnliche Produkte 15.

Mit Hilfe der Beimengung des Lösungsmittels 6 in die Kunststoffschmelze kann somit auf wirtschaftlich rentable Weise ein vergleichsweise großer Depolymerisationsreaktor mit einem Umsatzvolumen von deutlich mehr als 6.000 Tonnen pro Jahr, vorzugsweise über 100.000 Tonnen pro Jahr, betrieben werden, wobei aufgrund der Viskositätserniedrigung der Kunststoffschmelze nicht nur ein verbesserter Wärmeeintrag in das Kunststoffmaterial erfolgen kann, sondern zudem kann auch der Energieaufwand für den Betrieb der Pumpen 5, 9 der Leitungen 4, 8 des Versorgungs- und Filterkreislaufs reduziert werden. Darüber hinaus kann vorteilhafterweise auch auf eine Rührvorrichtung im Reaktor verzichtet werden und somit der Energieaufwand weiter reduziert werden.

## Patentansprüche

1. Verfahren zur Depolymerisation von Kunststoffmaterial (1), insbesondere Alt- bzw. Abfallkunststoffen, mittels Wärmeeintrag, wobei das Kunststoffmaterial (1) zu einer Kunststoffschmelze geschmolzen und entgast wird, bevor es einem Depolymerisationsreaktor (3) zugeführt wird, wobei der Kunststoffschmelze eine Rohöl-Fraktion als Lösungsmittel (6) zugesetzt wird, **dadurch gekennzeichnet, dass** als Lösungsmittel (6) ein Schweröl mit einem Siedeende > 300°C, vorzugsweise > 350°C, und mit einem Anteil an aromatischen Kohlenwasserstoffen von zumindest 25% verwendet wird, so dass die Viskosität der dem Depolymerisationsreaktor (3) zugeführten Kunststoffschmelze-Lösung gegenüber der Viskosität der Kunststoffschmelze verringert wird.

2. Verfahren nach Anspruch 1, **dadurch gekennzeichnet, dass** ein Teil der im Depolymerisationsreaktor (3) befindlichen Kunststoffschmelze abgepumpt und über einen Versorgungskreislauf wieder in den Depolymerisationsreaktor (3) zugeführt wird, insbesondere Kunststoffschmelze aus dem Depolymerisationsreaktor (3) abgepumpt und in den Depolymerisationsreaktor (3) rückgeführt wird.

3. Verfahren nach Anspruch 2, **dadurch gekennzeichnet, dass** das Lösungsmittel (6) in den Versorgungskreislauf eingebracht, vorzugsweise eingespritzt, wird.

4. Verfahren nach einem der Ansprüche 1 bis 3, **dadurch gekennzeichnet, dass** die zu depolymerisierende Kunststoffschmelze über den Versorgungskreislauf in den Depolymerisationsreaktor eingebracht wird.

5. Verfahren nach einem der Ansprüche 1 bis 4, **dadurch gekennzeichnet, dass** das Lösungsmittel vorzugsweise auf ca. zumindest 150°C, insbesondere auf im Wesentlichen 200°C bis 300°C erwärmt wird, bevor es der Kunststoffschmelze zugesetzt wird.

6. Verfahren nach einem der Ansprüche 1 bis 5, **dadurch gekennzeichnet, dass** ein Schweröl zugemischt wird, welches in der EINECS-Klassifizierung die Nr. 265-xxx-x oder Nr. 270-xxx-x aufweist, wobei x einen beliebigen Platzhalter darstellt, insbesondere ein Schweröl ausgewählt aus einer Gruppe umfassend folgende EINECs-Nummern: 265-064-6, 265-058-3, 265-189-6, 265-045-2, 265-193-8, 265-081-9, 270-675-6, 265-060-4, bzw. eine Mischung hievon.

7. Verfahren nach einem der Ansprüche 1 bis 6, **dadurch gekennzeichnet, dass** die Viskosität der Kunststoffschmelze-Lösung bei einer Temperatur von im Wesentlichen 180°C bis 240°C gegenüber der Kunststoffschmelze ohne Lösungsmittel um zumindest 30%, vorzugsweise um zumindest 50%, insbesondere um zumindest 80% reduziert wird.

8. Verfahren nach einem der Ansprüche 1 bis 7, **dadurch gekennzeichnet, dass** als Kunststoffmaterial (1) Polyolefine, insbesondere Polyethylen und Polypropylen, bzw. Polystyrol verwendet werden bzw. wird, und vorzugsweise das Kunststoffmaterial (1) in dem Depolymerisationsreaktor bei ca. 300°C bis 500°C, vorzugsweise 350°C bis 450°C, depolymerisiert wird.

9. Verfahren nach einem der Ansprüche 1 bis 8, **dadurch gekennzeichnet, dass** das depolymerisierte Kunststoffmaterial (1) in einem oberen Abschnitt des Depolymerisationsreaktors (3) dampfförmig abgezogen wird und vorzugsweise das dampfförmige, depolymerisierte Kunststoffmaterial in mehrere Produkte aufgetrennt wird, vorzugsweise einen Gasstrom (13), Flüssiggas und Naphtha (14), sowie ein gasöl-ähnliches Produkt (15).

10. Verfahren nach einem der Ansprüche 1 bis 9, **dadurch gekennzeichnet, dass** die Kunststoffschmelze-Lösung vor Einbringung in den Depolymerisationsreaktor (3) erwärmt wird.

## Claims

1. A method for the depolymerisation of plastics material (1), in particular pre- or post-consumer plastics wastes, by means of heat introduction, wherein the plastics material (1) is molten to form a plastics melt and degassed before being introduced to a depolymerisation reactor (3), wherein a fraction of crude oil is added to the plastics melt as a solvent (6), **characterised in that** a heavy oil having a final boiling point of > 300 °C, preferably > 350 °C, and having a share of aromatic hydrocarbons of at least 25% is used as the solvent (6), thereby lowering the viscosity of the plastics melt solution introduced to the depolymerisation reactor (3) relative to the viscosity of the plastics melt.

2. The method according to claim 1, **characterised in that** part of the plastics melt within the depolymerisation reactor (3) is pumped out and recirculated into the depolymerisation reactor (3) via a supply circuit, in particular plastics melt being pumped from the depolymerisation reactor (3) and recirculated into the depolymerisation reactor (3).

3. The method according to claim 2, **characterised in that** the solvent (6) is introduced, preferably injected, into the supply circuit.

4. The method according to any one of claims 1 to 3, **characterised in that** the plastics melt to be depolymerised is introduced into the depolymerisation reactor via the supply circuit.

5. The method according to any one of claims 1 to 4, **characterised in that** the solvent is preferably heated to at least approx. 150 °C, in particular substantially 200 °C to 300 °C, before it is added to the plastics melt.

6. The method according to any one of claims 1 to 5, **characterised in that** a heavy oil having no. 265-xxx-x or no. 270-xxx-x in the EINECS classification system, with x being an arbitrary placeholder, is added, in particular a heavy oil selected from a group comprising EINECS Nos. 265-064-6, 265-058-3, 265-189-6, 265-045-2, 265-193-8, 265-081-9, 270-675-6, 265-060-4 and/or a mixture thereof.

7. The method according to any one of claims 1 to 6, **characterised in that** the viscosity of the plastics melt solution is reduced by at least 30%, preferably by at least 50%, in particular by at least 80%, with respect to the plastics melt without solvent at a temperature of substantially 180 °C to 240 °C.

8. The method according to any one of claims 1 to 7, **characterised in that** polyolefines, in particular polyethylene and polypropylene, and/or polystyrene are used as the plastics material (1) and preferably the plastics material (1) is depolymerised in the depolymerisation reactor at approx. 300 °C to 500 °C, preferably 350 °C to 450 °C.

9. The method according to any one of claims 1 to 8, **characterised in that** the depolymerised plastics material (1) is extracted in an upper section of the depolymerisation reactor (3) in the form of vapour and preferably the vaporous, depolymerised plastics material is separated into several products, preferably a gas flow (13), liquid gas and naphtha (14) as well as a product (15) similar to gas oil.

10. The method according to any one of claims 1 to 9, **characterised in that** the plastics melt solution is heated before introduction into the depolymerisation reactor (3).

## Revendications

1. Procédé de dépolymérisation de matière plastique (1), en particulier de vieux plastiques ou de déchets plastiques, par apport de chaleur, dans lequel la matière plastique (1) est fondue de manière à obtenir une masse plastique fondue, et est soumise à un dégazage avant d'être amenée à un réacteur de dépolymérisation (3), une fraction de pétrole brut étant ajoutée comme solvant (6) à la masse plastique fondue, **caractérisé en ce qu'**est utilisé comme solvant (6) un pétrole lourd avec une fin d'ébullition > 300°C, préférentiellement > 350°C, et avec une part d'hydrocarbures aromatiques d'au moins 25 %, de manière à réduire la viscosité de la solution de masse plastique fondue amenée au réacteur de dépolymérisation (3) par rapport à la viscosité de la masse plastique fondue.

2. Procédé selon la revendication 1, **caractérisé en ce qu'**une partie de la masse plastique fondue se trouvant dans le réacteur de dépolymérisation (3) est pompée et retournée vers le réacteur de dépolymérisation (3) via un circuit d'alimentation, en particulier **en ce que** de la masse plastique fondue est pompée du réacteur de dépolymérisation (3) et ramenée vers le réacteur de dépolymérisation (3).

3. Procédé selon la revendication 2, **caractérisé en ce que** le solvant (6) est introduit, préférentiellement injecté, dans le circuit d'alimentation.

4. Procédé selon l'une des revendications 1 à 3, **caractérisé en ce que** la masse plastique fondue à dépolymériser est introduite dans le réacteur de dépolymérisation via le circuit d'alimentation.

5. Procédé selon l'une des revendications 1 à 4, **caractérisé en ce que** le solvant est préférentiellement chauffé à au moins 150°C, en particulier sensiblement entre 200°C et 300°C avant d'être ajouté à la masse plastique fondue.

6. Procédé selon l'une des revendications 1 à 5, **caractérisé en ce qu'**un pétrole lourd est ajouté, affecté du n° 265-xxx-x ou du n° 270-xxx-x dans la classification EINECS, x étant un caractère de remplacement quelconque, en particulier **en ce qu'**un pétrole lourd est sélectionné dans un groupe comprenant les n° EINECS suivants : 265-064-6, 265-058-3, 265-189-6, 265-045-2, 265-193-8, 265-081-9, 270-675-6, 265-060-4, ou un mélange de ceux-ci.

7. Procédé selon l'une des revendications 1 à 6, **caractérisé en ce que**, à une température comprise sensiblement entre 180°C et 240°C, la viscosité de la solution de masse plastique fondue est réduite d'au moins 30 %, préférentiellement d'au moins 50 %, en particulier d'au moins 80 %, par rapport à la masse plastique fondue sans solvant.

8. Procédé selon l'une des revendications 1 à 7, **caractérisé en ce que** des polyoléfines, en particulier le polyéthylène et le polypropylène, ou le polystyrène sont utilisés comme matière plastique (1), et préférentiellement en ce que la matière plastique (1) est dépolymérisée entre 300°C et 500°C, préférentiellement entre 350°C et 450°C, dans le réacteur de dépolymérisation.

9. Procédé selon l'une des revendications 1 à 8, **caractérisé en ce que** la matière plastique dépolymérisée (1) est extraite sous forme de vapeur dans une partie supérieure du réacteur de dépolymérisation (3) et **en ce que** la matière plastique dépolymérisée sous forme gazeuse est préférentiellement séparée en plusieurs produits, préférentiellement un flux gazeux (13), du gaz liquide et du naphta (14), ainsi qu'un produit similaire au gasoil (15) .

10. Procédé selon l'une des revendications 1 à 9, **caractérisé en ce que** la solution de masse plastique fondue est chauffée avant d'être introduite dans le réacteur de dépolymérisation (3).
